# EUROPÄISCHE PATENTSCHRIFT

(11) **EP 0 783 005 B1**
(45) Veröffentlichungstag und Bekanntmachung des Hinweises auf die Patenterteilung: **24.11.1999**
(21) Anmeldenummer: 96120751.1
(22) Anmeldetag: 23.12.1996
(51) Int. Cl.: C08F 8/12, A61F 13/00, H01B 3/44, E02D 3/08

(54) **Verfahren zur kontinuierlichen Herstellung von superabsorbierenden Polymerisaten aus PAN-Emulsionen**
Process for the continuous production of super-absorbent polymers from PAN emulsions
Procédé pour la préparation en continu de polymères superabsorbants à partir d'émulsions de polyacrylonitrile

(30) Priorität: 04.01.1996 DE 19600163
(43) Veröffentlichungstag der Anmeldung: 09.07.1997
(73) Patentinhaber: BAYER AG, 51368 Leverkusen (DE)
(72) Erfinder: Sackmann, Guenter, Dr., 51379 Leverkusen (DE); Schapowalow, Sergej, Dr., 51061 Köln (DE); Ullrich, Martin, Dipl.-Ing., 51375 Leverkusen (DE); Brod, Helmut, Dr., 51061 Köln (DE)

(56) Entgegenhaltungen:
- EP-A- 0 067 362
- EP-A- 0 331 848
- EP-A- 0 670 335
- DE-A- 2 903 267
- GB-A- 969 714
- US-A- 3 864 323

## Beschreibung

Die Erfindung betrifft ein Verfahren zur kontinuierlichen Herstellung von superabsorbierenden Polymerisaten mit extrem hohem Quellungsvermögen.

In der Deutschen Offenlegungsschrift 4 406 951 und der Deutschen Patentanmeldung P-4 429 318.6 werden superabsorbierende Polymerisate mit extrem hohem Quellvermögen und sehr hohen Gelfestigkeiten beschrieben. Diese Produkte erhält man durch Hydrolyse von sehr feinteiligen Polyacrylnitril(PAN)-Emulsionen bei 50 bis 100°C und Reaktionszeiten von 1 bis 2 Stunden. Unvernetzte oder schwach vernetzte Homo- und/oder Copolymerisat-Emulsionen des Acrylnitrils können eingesetzt werden, die in Gegenwart eines anionischen polymeren Emulgators hergestellt worden sind. Bei der Hydrolyse mit wäßrigen Losungen von Alkalihydroxiden entstehen unter den dort angegebenen Reaktionsbedingungen teilhydrolysierte Homo- und/oder Copolymerisate des Acrylnitrils, worin 30 bis 80 Mol-% der Nitrilgruppen in Carboxylatgruppen und 20 bis 70 Mol-% Nitrilgruppen in Carbonamidgruppen umgewandelt sind und 0 bis 20 Mol-% der Nitrilgruppen unverändert bleiben. Unvernetzte und vernetzte PAN-Emulsionen ergeben Produkte mit verschiedenem freiem Quellungsvermögen (700 bis 1000 g/g in entionisiertem Wasser und 50 bis 90 g/g in physiologischer Kochsalzlösung) bei Gelfestigkeiten von 30 bis 100 g. Im allgemeinen Zeigen superabsorbierende Polymerisate, die aus unvernetzten PAN-Emulsionen erhalten wurden, ein hohes Quellungsvermögen bei mittlerer bis hoher Gelfestigkeit, während superabsorbierende Polymerisate, die aus vernetzten PAN-Emulsionen hergestellt wurden, bei mittlerem Quellungsvermögen in der Regel sehr hohe Gelfestigkeiten aufweisen.

Durch geeignete Wahl der Ausgangsemulsionen können so Produkte hergestellt werden, deren Eigenschaften auf das jeweilige Anwendungsgebiet abgestimmt sind.

Die superabsorbierenden Polymerisate sind bisher nur nach einem diskontinuierlich arbeitenden Verfahren hergestellt worden. Aufgrund des bei beginnender Hydrolyse auftretenden Übergangs von der niedrig-viskosen PAN-Emulsion in den hochviskosen, wassergequollenen Zustand stößt man bei der Durchführung des beschriebenen Verfahrens in konventionellen Rührapparaturen sehr schnell an eine Grenze. Es können nur Reaktionsgemische mit PAN-Konzentrationen <15 Gew.-% eingesetzt werden, da das sich bei der Hydrolyse bildende hochviskose Reaktionsgemisch sonst nicht mehr handhabbar ist und keine Superabsorber mit reproduzierbaren Eigenschaften hergestellt werden können.

Es wurde gefunden, daß superabsorbierende Polymerisate aus PAN-Emulsionen kontinuierlich und reproduzierbar aus konzentrierten Emulsionen hergestellt werden können, wenn man selbstreinigende Reaktoren mit für eine Verweilzeit von 0,5 bis 2 Stunden ausreichendem Volumen einsetzt.

Zur Herstellung von superabsorbierenden Polymeren durch Hydrolyse von PAN-Emulsionen sind besonders solche Geräte geeignet, die längere Verweilzeiten bei hinreichend guter Vermischung und gutem Wärmeübergang bei gleichzeitiger Abführung des während der Hydrolyse entstehenden gasförmigen Ammoniaks erlauben. Besonders geeignet sind sogenannte "List-Reaktoren" (Hersteller: Firma List AG, CH-4422 Arisdorf, Schweiz) mit bis zu 16,5 m³freiem Volumen, die als Einwellen-und Zweiwellengeräte gebaut werden und spezielle Misch- und Abstreiforgane sowohl auf der Welle als auch im Reaktorgehäuse besitzen. Solche Reaktoren können auch hintereinander geschaltet werden, wodurch eine große Flexibilität beim Einsatz erreicht werden kann.

Gegenstand der Erfindung ist ein Verfahren zur kontinuierlichen Herstellung von superabsorbierenden Polymerisaten, worin man wässrige Emulsionen von vernetzten oder unvernetzten Polyacrylnitril-Homo und/oder Copolymerisaten in einem kontinuierlich arbeitenden, mischenden und knetenden Langzeitreaktor durch Reaktion mit wäßrigen Alkalihydroxidlösungen bei 50 bis 100°C, vorzugsweise bei 70 bis 100°C, bevorzugt bei 85 bis 95°C, vorzugsweise 0,5 bis 2 Stunden, bevorzugt 1 bis 1,5 Stunden hydrolysiert. Die Konzentration der vernetzten und unvernetzten Polyacrylnitril-Emulsionen im Reaktionsgemisch ist 10 bis 45 Gew.-%, vorzugsweise 10 bis 40 Gew.-%, so daß wegen der durch die Hydrolyse verursachten Gewichtszunahme von ca. 60 % die Endkonzentration im Reaktionsgemisch 16 bis 65 Gew.-% beträgt. Selbst bei den höchsten möglichen Konzentrationen, die durch die Kolloidstabilität der wäßrigen PAN-Emulsionen begrenzt sind, ist die Durchmischung und der Wärmeübergang des Reaktionsgemisches im "List"-Reaktor völlig ausreichend. Die Verweilzeiten in den waagerecht gelagerten Reaktoren können einerseits durch die Bauweise und die Länge des Reaktors und andererseits durch den Durchsatz, den Füllgrad und die Umdrehungsgeschwindigkeit der Welle gesteuert werden. Das bei der Hydrolyse entstehende gasförmige Ammoniak wird während der Reaktion aus dem Reaktor über spezielle Austrittsöffnungen und anschließende Absorption in Wasser oder durch Tieftemperaturkondensation entfernt.

Nach Beendigung der Hydrolyse kann das Reaktionsgemisch direkt aus dem List-Reaktor in einen mit einem schnellaufenden Rührer ausgestatteten Fällungsreaktor, der einen niedrigsiedenden Monoalkohol, z.B. Methanol oder Ethanol, enthält, kontinuierlich eingetragen werden. Dabei fällt das superabsorbierende Polymerisat als feines, leicht filtrierbares Pulver aus. Nach dem Trocknen und Mahlen auf die gewünschte Korngröße liegt dann der fertige Superabsorber vor.

Durch nachfolgendes 2- bis 30-minütiges, bevorzugt 5- bis 15-minütiges Erhitzen der superabsorbierenden Polymerisate auf 150 bis 250°C können deren anwendungstechnische Eigenschaften deutlich verbessert werden, insbesondere die Quellungskinetik, d.h. die Aufnahmegeschwindigkeit für Wasser und andere Flüssigkeiten sowie die Gelfestigkeit der gequollenen Polymeren und ihr Aufnahmevermögen für wäßrige Flüssigkeiten unter Druck. Diese thermische Behandlung kann in üblichen Trocknern oder Öfen (Drehrohrofen, Wirbelbetttrockner, Tellertrockner und Infrarottrockner) durchgeführt werden.

Alternativ zur Fällung mit Alkoholen kann das Hydrolysat auch direkt im Vakuum bei Temperaturen bis zu 100°C getrocknet und anschließend gemahlen sowie nach Korngrößen klassiert werden.

Die derart erhältlichen superabsorbierenden Polymerisate besitzen ausgezeichnete anwendungstechnische Eigenschaften. So erreichen z.B. die Produkte, die aus unvernetzten PAN-Emulsionen erhalten wurden, folgende Quellungsgrade: 500 bis 800 g/g in entionisiertem Wasser und 40 bis 80 g/g in 0,9 %iger NaCl-Lösung. Die mit einem "Stevens Texture Analyzer" gemessenen Werte für die Gelfestigkeiten der gequollenen Produkte liegen zwischen 40 und 66 g. Beim Einsatz von schwach mit Divinylbenzol vernetzten PAN-Emulsionen lagen die Meßwerte der erhaltenen Superabsorber in folgenden Bereichen: 300 bis 500 g/g in entionisiertem Wasser und 30 bis 40 g/g in 0,9 %iger NaCl-Lösung; Gelfestigkeiten: 50 bis 80 g.

Durch nachfolgendes Erhitzen der vernetzten superabsorbierenden Polymerisate auf 150 bis 250°C, bevorzugt 170 bis 210°C, für 2 bis 30 Minuten, bevorzugt 5 bis 15 Minuten, lassen sich deren ausgezeichnete anwendungstechnische Eigenschaften nochmals deutlich verbessern. Dies betrifft insbesondere die Quellungskinetik, d.h. die Absorptionsgeschwindigkeit für Wasser und andere Flüssigkeiten und die Gelfestigkeiten der gequollenen Polymeren sowie ihr Aufnahmevermögen für Wasser und wäßrige Lösungen unter Druck.

Die nach dem erfindungsgemäßen Verfahren erhältlichen superabsorbierenden Polymerisate eignen sich vorzüglich für den Einsatz bei der Herstellung von Hygieneartikeln, wie z.B. Babywindeln oder Inkontinenzartikeln für Erwachsene, sowie zur Ummantelung von Elektrokabeln. Außerdem können die Produkte in der Landwirtschaft als wasserspeichernde Materialien eingesetzt werden.

### Beispiele

### Beispiel 1

Ein Reaktionsgemisch aus 1905,4 g einer durch den Einbau von 0,75 Gew.-% Divinylbenzol schwach vernetzten Polyacrylnitril-Emulsion mit Teilchen eines mittleren Durchmessers von 118 nm und einem Feststoffgehalt von 24,2 Gew.-% und 2286,4 g einer 7,61 gew.-%igen wäßrigen NaOH-Lösung wurde nach Vorerhitzen auf eine Temperatur von 90°C in einen einwelligen Reaktor der Firma List vom Typ Discotherm B mit einem freien Innenvolumen von 7,1 l gepumpt. Am Beginn der Reaktion hat das Reaktionsgemisch folgende Zusammensetzung: 11,0 Gew.-% Polyacrylnitril und 4,15 Gew.-% NaOH, wobei das Molverhältnis Polyacrylnitril zu NaOH 1:0,5 beträgt. Die anschließende Hydrolyse wurde bei 95°C durchgeführt. Nach Erreichen eines Hydrolysegrades von 44 bis 50 % - ermittelt durch quantitative Bestimmung des sich abspaltenden Ammoniaks - wird das schwach gelb gefärbte Reaktionsgemisch, das nun einen Feststoffgehalt von 17,9 Gew.-% aufweist, auf 40 bis 45°C abgekühlt. Dieses gelartige Reaktionsgemisch wird mit einer Austragsschnecke über eine Lochplatte in einen Kessel mit einem schnellaufenden Rührwerk extrudiert, wo die Neutralisation der nicht verbrauchten Natronlauge und die Fällung des Produktes mit einer Mischung aus Salzsäure und Ethanol bei 20 bis 25°C durchgeführt werden. Das Volumenverhältnis von Ethanol zu Wasser im Reaktionsgemisch beträgt dabei 1:1,0 bis 1,2.

Nach Abfiltrieren und Trocknen im Vakuumtrockenschrank bei 60 bis 70°C erhält man ca. 735 g eines farblosen Pulvers, das nach dem Mahlen aus Teilchen mit einem mittleren Durchmesser von 20 bis 3000 µm besteht. Das erhaltene Produkt kann durch Sieben klassiert werden.

Zur Verbesserung seiner anwendungstechnischen Eigenschaften kann das superabsorbierende Polymerisat anschließend einer thermischen Behandlung bei 150 bis 200°C unterzogen werden.

### Bestimmung des Quellungsgrades:

250 mg des zu untersuchenden superabsorbierenden Polymerisates werden in ein 300 ml-Becherglas eingewogen und mit 250 bis 300 ml destilliertem Wasser bzw. mit 50 ml einer 0,9 gew.-%igen NaCl-Lösung übergossen und stehen gelassen. Nach Erreichen des Quellungsgleichgewichts wird das erhaltene Gel über ein Filtertuch mit der Maschenweite 30 µm oder ein Papierfilter abfiltriert und ausgewogen. Der Quellungsgrad errechnet sich dann aus dem Verhältnis Auswaage.Einwaage in g/g. Jede Bestimmung wird dreimal durchgeführt. Die Meßgenauigkeit beträgt ±5 %.

Für das nach Beispiel 1 erhaltene Produkt (mittlerer Teilchendurchmesser: 200 bis 1000 µm) ergibt sich ein Quellungsgrad von 350 g/g in destilliertem Wasser und von 38,5 g/g in 0,9 %iger NaCl-Lösung.

### Messung der Gelfestigkeit:

Verwendete Apparatur: Stevens L.F.R.A. Texture Analyzer
Meßprinzip: eine zylindrische oder konische Prüfsonde wird mit einer vorgewählten Geschwindigkeit und Meßstrecke in das Gelprüfmuster gedrückt. Die daraus resultierende Kraft in g wird gemessen und digital angezeigt.

Durchführung der Messungen: 1 g der zu untersuchenden Probe wird in 170 ml enionisiertem Wasser 2 Stunden lang gequollen. Danach wird das Gel in ein 150 ml-Becherglas überführt. Nach Temperierung der Probe bei 20°C wird das Meßgerät auf eine Geschwindigkeit von 1 mm/sec und einen Penetrationsweg von 10 mm sowie auf das Prüfprogramm "normal" eingestellt. Als Prüfsonde verwendet man die Zylinderprüfsonde mit der Bezeichnung TA 3, welche einen Durchmesser von 1 Zoll aufweist. Mit jeder Probe werden mindestens zwei Messungen durchgeführt.

Die Gelfestigkeit des mit dem nach Beispiel 1 erhaltenen Produktes beträgt 74 g.

### Beispiele 2 bis 8

Die Ergebnisse der Beispiele 2 bis 8 sind in Tabelle 1 zusammengefaßt.

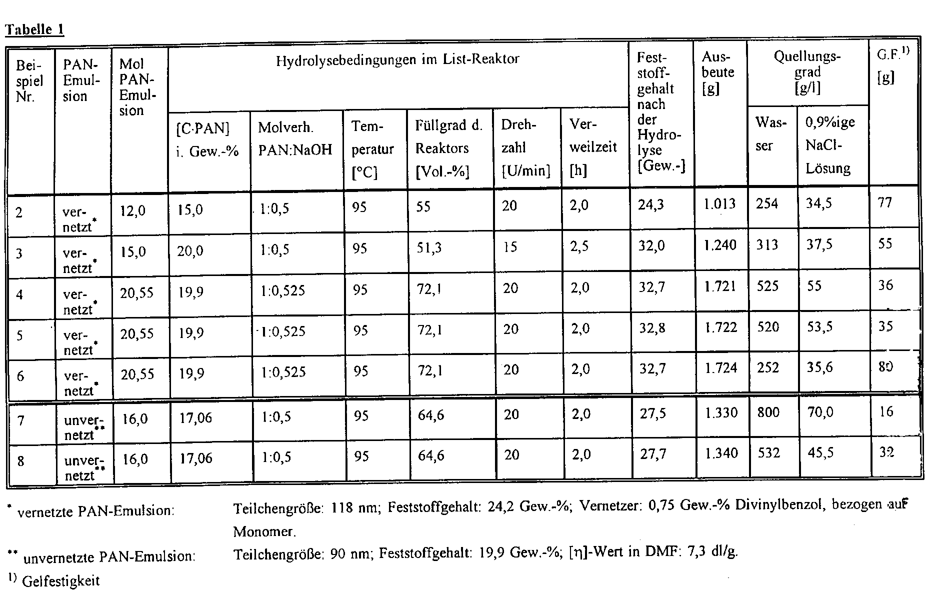

In den drei letzten Spalten der Tabelle sind die Quellungsgrade der Produkte in destilliertem Wasser und 0,9 %iger NaCl-Lösung sowie die Gelfestigkeiten der Produkte bei Teilchengrößen von 200 bis 1000 µm aufgeführt. Dabei wurden für die Beispiele 2 bis 4 die Reaktionsgemische mit ansteigender Ausgangskonzentration an Polyacrylnitril eingesetzt.

### Beispiel 5

Bei diesem Beispiel wurde die Hydrolyse unter den gleichen Bedingungen wie im Beispiel 4 durchgeführt. Die Fällung des Produktes erfolgte dabei mit Methanol bei einem Volumenverhältnis von Methanol zu Wasser von 1:0,5 bis 0,55 bei einer Temperatur von 20 bis 25°C.

### Beispiel 6

Die Hydrolyse erfolgte hierbei unter den gleichen Bedingungen wie in den Beispielen 4 und 5. Nach der Hydrolyse wurde das Reaktionsgemisch (Gel) direkt im Vakuum bei einer Temperatur von 65 bis 70°C bis zu einer Restfeuchtigkeit von ca. 15 Gew.-% getrocknet. Danach wurde das Produkt gemahlen, und als letzte Stufe vor dem Trocknen erfolgte die Neutralisation des Produktes mit Ameisensäure in einem Methanol/Wasser-Gemisch. Das Gewichtsverhältnis Produkt:Methanol:Wasser betrug 1:2,2:1,25.

### Beispiel 7

Als Ausgangsprodukt zur Hydrolyse im List-Reaktor wurde eine unvernetzte PAN-Emulsion eingesetzt. Die Konzentration von PAN im Reaktionsgemisch betrug dabei 17,06 Gew.-%. Die Hydrolyse und die Fällung des Produktes wurden unter den gleichen Bedingungen wie in Beispiel 1 durchgeführt.

### Beispiel 8

Die Bedingungen für die Hydrolyse entsprachen denjenigen aus Beispiel 7. Das erhaltene Reaktionsgemisch wurde ohne Fällung getrocknet. Die Mahlung und die nachfolgende Neutralisation erfolgten in einem Methanol-Wasser-Gemisch wie in Beispiel 6 beschrieben.

In Tabelle 2 sind die Ergebnisse von Messungen der Gelstärke und der Quellungsgrade von einigen ausgewählten Produkten nach ihrer thermischen Behandlung zusammengefaßt, die in Tabelle 1 aufgeführt sind (Beispiele 4 und 7).

| Beispiel Nr. | Thermische Behandlung (t=15 min) | Quellungsgrad [g/g] | | Gelfestigkeit [g] |
|---|---|---|---|---|
| | | in Wasser | in 0,9 % NaCl-Lösung | |
| 4 | - | 525 | 53,0 | 36 |
| | 165°C | 245 | 37,7 | 74 |
| 7 | - | 800 | 70,0 | 16 |
| | 180°C | 335 | 40,5 | 63 |

## Patentansprüche

1. Verfahren zur kontinuierlichen Herstellung von superabsorbierenden Polymerisaten, dadurch gekennzeichnet, daß man wäßrige Emulsionen von unvernetzten und vernetzten Polyacrylnitril-Homo und/oder Copolymerisaten bei Polyacrylnitril-Konzentrationen im Reaktionsgemisch von 10 bis 45 Gew.-% in einem für die Durchführung von hochviskosen Reaktionen geeigneten, kontinuierlich arbeitenden Reaktor mit wäßrigen Alkalihydroxidlösungen bei 50 bis 100°C hydrolysiert und aus den sich dabei bildenden hochviskosen Gelen durch kontinuierliche Fällung mit niedrigsiedenden Monoalkoholen die Produkte als superabsorbierende Pulver kontinuierlich ausfällt.

2. Verfahren gemäß Anspruch 1, worin als Hochviskos-Reaktor ein mischender und knetender Langzeitreaktor eingesetzt wird.

3. Verfahren gemäß Anspruch 2, worin die Hydrolyse der Polyacrylnitril-Emulsionen bei Temperaturen von 70 bis 100°C durchgeführt wird.

4. Verfahren gemäß Anspruch 2, worin die Hydrolyse der Polyacrylnitril-Emulsion 0,5 bis 2 Stunden durchgeführt wird.

## Claims

1. A process for the continuous production of super-absorbent polymers, characterised in that aqueous emulsions of uncross-linked and cross-linked polyacrylonitrile homopolymers and/or copolymers, the polyacrylonitrile concentrations in the reaction mixture being from 10 to 45 wt.%, are hydrolysed with aqueous alkali hydroxide solutions at 50 to 100°C in a continuously operating reactor suitable for carrying out highly viscous reactions, and that from the highly viscous gels formed the products in the form of superabsorbent powders are continuously precipitated by means of continuous precipitation using low-boiling monoalcohols.

2. A process according to claim 1, wherein a mixing and kneading extended reactor is used as the high-viscosity reactor.

3. A process according to claim 2, wherein the hydrolysis of the polyacrylonitrile emulsions is carried out at temperatures of from 70 to 100°C.

4. A process according to claim 2, wherein the hydrolysis of the polyacrylonitrile emulsion is carried out for from 0.5 to 2 hours.

## Revendications

1. Procédé pour la préparation continue de polymères superabsorbants, caractérisé en ce que l'on hydrolyse des émulsions aqueuses d'homo- et/ou co-polymères de l'acrylonitrile réticulés ou non réticulés, à des concentrations en polyacrylonitrile de 10 à 45% en poids dans le mélange de réaction, dans un réacteur opérant en continu et approprié à l'exécution d'opérations sur des matières à haute viscosité, a l'aide de solutions aqueuses d'hydroxydes alcalins, à des températures de 50 à 100°C, et à partir des gels fortement visqueux obtenus dans ces conditions, on précipite en continu les produits à l'état de poudres superabsorbantes par précipitation continue à l'aide de monoalcools à bas point d'ébullition.

2. Procédé selon la revendication 1, dans lequel le réacteur admettant les hautes viscosités est un réacteur mélangeur et malaxeur permettant de longues de durées d'opération.

3. Procédé selon la revendication 2, dans lequel l'hydrolyse des émulsions de polyacrylonitrile est réalisée à des températures de 70 à 100°C.

4. Procédé selon la revendication 2, dans lequel l'hydrolyse de l'émulsion de polyacrylonitrile est réalisée en une durée de 0,5 à 2 h.
